# EUROPÄISCHE PATENTSCHRIFT

(11) **EP 0 707 187 B1**
(45) Veröffentlichungstag und Bekanntmachung des Hinweises auf die Patenterteilung: **23.08.2000**
(21) Anmeldenummer: 95114604.2
(22) Anmeldetag: 16.09.1995
(51) Int. Cl.: F27B 7/20, F27D 17/00, C04B 7/60

(54) **Anlage zur thermischen Behandlung von mehlförmigen Rohmaterialien**
Installation for the thermic treatment of pulverized products
Installation pour le traitement thermique de produits en poudre

(30) Priorität: 15.10.1994 DE 4436939
(43) Veröffentlichungstag der Anmeldung: 17.04.1996
(73) Patentinhaber: Deutz Aktiengesellschaft, 51149 Köln (DE)
(72) Erfinder: Bauer, Claus, D-51147 Köln (DE)

(56) Entgegenhaltungen:
- EP-A- 0 143 395
- EP-A- 0 534 225
- DE-A- 3 215 793
- US-A- 4 201 546

## Beschreibung

Die Erfindung betrifft eine Anlage zur thermischen Behandlung von mehlförmigen Rohmaterialien, insbesondere zur Herstellung von Zementklinker aus Rohmehl, bestehend aus einem Drehrohrofen und wenigstens einem dem Drehrohrofen vorgeschalteten und von dessen Abgas durchströmten Wärmetauscherstrang insbesondere Zyklonschwebegaswärmetauschersystem und einem dem Drehrohrofen nachgeschalteten Klinkerkühler, mit einem Bypass- bzw. Teilgasabzug zum Abzug eines Teilstromes des Drehofenabgases mit Kühlung und Entstaubung des abgezogenen Bypassgastromes bzw. Teilgasstromes.

In der Zementtechnologie ist es bekannt, daß viele Einsatzstoffe zur Zementklinkerherstellung Nebenbestandteile wie z. B. Alkaliverbindungen, Schwefel, Chlor, Schwermetalle etc. enthalten, die im Bereich der Sinterzone z. B. als Alkalichlorid- und Alkalisulfatverbindungen verdampfen, im Vorwärmerbereich wieder kondensieren und somit Kreisläufe aufbauen, wodurch sowohl die Qualität des Zementklinkers ungünstig beeinflußt als auch der Brennprozeß selbst erheblich gestört werden können. Zur Unterdrückung eines Alkalikreislaufes in einer Zementklinker-Brennanlage sowie zur Reduzierung des Alkaligehaltes im Zementklinker ist es bekannt, durch einen sogenannten Bypassgasabzug bzw. Teilgasabzug einen Teil der die Alkaliverbindungen enthaltenden Ofenabgase am unteren Bereich des Abgassteigrohres zwischen Drehrohrofen und Schwebegasvorwärmer abzuzweigen und abzuführen, also bei einem Temperaturniveau, bei welchem die flüchtigen Bestandteile noch nicht oder nur teilweise kondensiert sind. Sind dabei das abgezogene Bypassgas sowie der mit diesem mitgezogene Ofenstaub hochalkalihaltig, müssen das Bypassgas sowie ggf. auch der aus diesem abgetrennte Ofenstaub bzw. Bypassgasstaub verworfen werden (Aufsatz "Probleme der Elektroentstaubung hochalkalichloridhaltiger Abgase aus Teilgasabzügen bei Wärmetauscher-Trockendrehöfen" in DE-Z "Zement-Kalk-Gips" Nr. 5/1978, Seiten 236 bis 238).

Bekannt ist, daß der der Zementklinkerproduktionslinie entnommene Teilgasstrom gewöhnlich mit kalter Frischluft und Wasser abgekühlt und dann in einem Elektrofilter entstaubt wird. Aus verschiedenen Gründen muß des öfteren auf die Teilgasstromabkühlung mittels Wasser verzichtet werden, so daß der Teilgasstrom nur mit Umgebungsluft abgekühlt werden kann. Zur Vermeidung übergroßer Gasmassen, und damit auch übergroßer teurer Elektrofilter wird dann der Teilgasstrom mit Umgebungsluft nur auf ca. 300 bis 400 °C abgekühlt, und bei dieser Temperatur erfolgt auch die Heißgas-Entstaubung. Auch dabei werden Entstaubungsgrade erreicht, die den gesetzlichen Vorschriften genügen. Während der entstaubte Teilgasstrom in die Umgebung entlassen wird, wird der abgetrennte heiße Staub in Sammeltrichtern des Elektrofilters gesammelt und in einer Staubsammeleinrichtung gespeichert. Zu seiner weiteren Behandlung bzw. Verarbeitung wie z. B. Kompaktierung muß der heiße Staub oftmals abgekühlt werden, da eine Staubkompaktierung mit Wasser als Bindemittel nur mit abgekühltem bzw. kaltem Staub möglich ist.

Die Abkühlung des heißen Bypassstaubes kann auf zweifache Weise geschehen, nämlich indirekt z. B. in Kühlschnecken, oder auch direkt durch Abkühlung mit Luft. Zur indirekten Abkühlung des Heißstaubes: Bei größeren Anlagen, z. B. für Heißstaubmengen von 10 t/h und mehr, wäre eine sehr große Anzahl von Kühlschnecken erforderlich, da die Wärmeübertragungsfläche gering ist und die belüftete Staubschüttung innerhalb der Kühlschnecke eine isolierende Schicht darstellt, welche die Wärmeübertragung behindert. Anbackungen im Schneckenkühler in Form von Krusten erschweren außerdem den Wärmeübergang. Die Folge ist ein hoher Wartungsaufwand, so daß der Einsatz von Kühlschnecken nur kleinen Anlagen vorbehalten bleibt. Zur direkten Abkühlung des Heißstaubes: Die direkte Abkühlung des Heißstaubes mit Luft wäre auch für große Anlagen möglich. Die aus dem Heißstaubkühler austretende Suspension aus Kühlluft und Staubpartikeln müßte allerdings in einer separaten Entstaubungseinrichtung entstaubt werden, bevor die erwärmte Kühlerabluft in die Umgebung entlassen wer- den kann. Eine solche separate Entstaubungseinrichtung wäre aufwendig, da der abzutrennende Staub teilweise aus sehr feinen sublimierten Partikeln besteht, die im Heißstaubkühler selbst nicht zurückgehalten werden können. Die Erfahrung hat gezeigt, daß hierzu sehr großflächige Tuchfilter eingesetzt werden müßten, die durch hohe Investitions- und Betriebskosten gekennzeichnet sind.

Aus der EP-A-0 534 225 ist eine gattungsgemäße Zementklinkerproduktionslinie mit Teilgasabzug bzw. Bypassgasabzug bekannt. Dort wird der in einem elektrostatischen Staubabscheider vom heißen und mit Schadstoffen belasteten Bypassstaub befreite Bypassgasstrom in den Klinkerkühler rezirkuliert. Dort ist aber nicht bekannt, ob bzw. wie der aus dem Bypassgas abgetrennte heiße belastete Bypassstaub vor seiner weiteren Verwertung gekühlt wird.

Der Erfindung liegt die Aufgabe zugrunde, für die thermische Behandlung von Rohmaterialien insbesondere zur Herstellung von Zementklinker mit Bypass- bzw. Teilgasabzug zum Abzug eines Teilstromes des Drehofenabgases, wobei der Teilgasstrom abgekühlt und in einer Entstaubungseinrichtung vom heißen Bypassstaub befreit wird, einen zur Bewältigung auch großer Durchsatzleistungen geeigneten und betriebssicher zu betreibenden Kühler zur Abkühlung heißen Bypassstaubes zu schaffen, ohne daß eine separate Entstaubungseinrichtung für die Abluft des Bypassstaubkühlers notwendig ist.

Diese Aufgabe wird gemäß der Erfindung mit den Maßnahmen des Kennzeichnungsteils des Anspruchs 1 gelöst. Vorteilhafte Ausgestaltungen sind in den Unteransprüchen angegeben.

Erfindungsgemäß ist der Heißstaubkühler, der wenigstens die aus dem Teilgasstrom-Entstauber wie z. B. elektrostatischen Staubabscheider ausgetragenen Staub-Grobkornkomponenten abkühlt, ein direkt mit Kühlluft betriebener Heißstaubkühler, in welchem der heiße Staub durch direkte Wärmeübertragung mittels Kühlluft gekühlt wird, wobei die vom Heißstaubkühler abgezogene erwärmte und mit mitgenommenen Feinststaub beladenen Kühlluft ggf. über ein eigenes Saugzuggebläse direkt in den Teilgasstromkühler bzw. in dessen Mischkammer eingeführt wird. Bei dem auf diese Weise in die Zementklinkerproduktionslinie mit Teilgasabzug erfindungsgemäß integrierten Heißstaubkühler entfällt eine separate Entstaubungseinrichtung für die Abluft dieses Heißstaubkühlers, denn die Kühlerabluft wird, nachdem sie zur Abkühlung des vom Drehofenabgas abgezweigten Teilgasstromes ausgenutzt worden ist, zusammen mit dem Teilgasstrom in dem für diesen ohnehin notwendigen Entstauber wie insbesondere Elektrofilter entstaubt. Mit Vorteil wird der Anteil des ausgetragenen Feinkorns des heißen Bypassstaubes aus dem Teilgasstrom-Entstauber nicht in den direkt mit Kühlluft betriebenen Heißstaubkühler eingeführt, sondern umgeht diesen, um zu vermeiden, daß sich die Feinkornkomponente des Bypassstaubes im System Teilgasabzug/Bypassstaubkühler anreichert, was zu erhöhten Emissionen von Staub am Kamin führen kann. In jedem Fall wird die Wärme aus dem Bypassstaub durch den integriert geschalteten Bypassstaubkühler über dessen angewärmte Kühlerabluft in den Teilgasstrom zurückgeführt.

Nach einem besonderen Merkmal der Erfindung kann der direkt mit Kühlluft betriebene Heißstaubkühler aus einem durch kombinierten Gegenstrom/ Gleichstrom charakterisierten Zyklonschwebegaswärmetauschersystem mit wenigstens einer Zyklonstufe bestehen, z. B. mit zwei oder drei Zyklonstufen. Aus der obersten Zyklonstufe des mit hohem Wirkungsgrad arbeitenden Zyklonkühlersystems tritt die Kühlerabluft schon weitgehend befreit vom Bypassstaub aus, und der Reststaub wird in der für den Teilgasstrom ohnehin vorhandenen Entstaubungseinrichtung wie z. B. Elektrofilter abgetrennt.

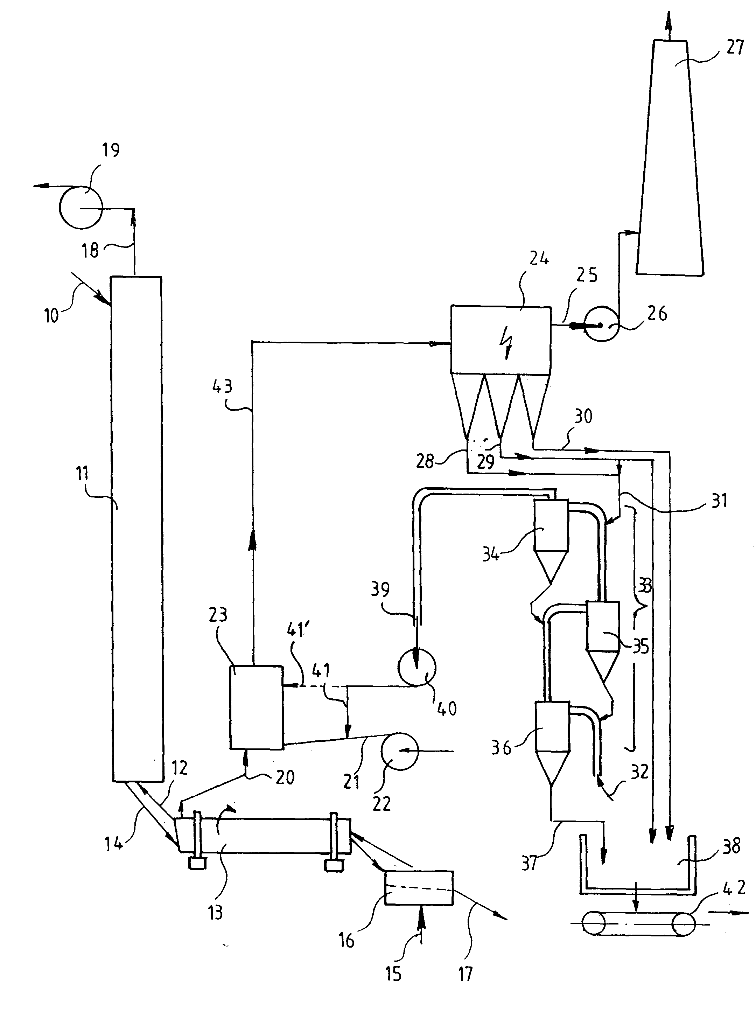

Die Erfindung und deren weitere Merkmale und Vorteile werden anhand des in der Zeichnung schematisch dargestellten Ausführungsbeispieles näher erläutert.

Die Zeichnung zeigt eine Anlage zur Herstellung von Zementklinker aus Zementrohmehl, das bei (10) in die Vorwärmstufe (11) wie z. B. in ein Zyklonschwebegas-Wärmetauschersystem aufgegeben wird, wo es im kombinierten Gleich-/Gegenstrom zum heißen Abgas (12) eines Drehrohrofens (13) bzw. einer Calcinierstufe mehrere Zyklonstufen durchwandert, um nach Abtrennung aus der Vorwärmstufe (11) bzw. Calcinierstufe als hochgradig (z. B. 95 %) calciniertes Zementrohmehl (14) in die Einlaufkammer des Drehrohrofens (13) eingeführt zu werden, in dessen Sinterzone es zu Zementklinker gebrannt wird, der anschließend in einem mit Frischluft (15) versorgten Klinkerkühler (16), im Ausführungsbeispiel ein Schubrostkühler, abgekühlt wird. Der abgekühlte Zementklinker verläßt den Klinkerkühler (16) bei (17). Das am Zementrohmehl abgekühlte Abgas verläßt die Vorwärmstufe (11) der Anlage bei (18). Dieses Abgas (18) wird über ein Saugzuggebläse (19) über Abgaskühler und Staubabscheider zu einem nicht dargestellten Hauptkamin gefördert und dort aus der Anlage abgezogen.

An die Einlaufkammer des Drehrohrofens (13) ist eine Teilgasabzugsleitung (20) angeschlossen, durch welche z. B. 5 bis 50% der Menge des ca. 1200 °C heißen Drehofenabgases als heißer schadstoffhaltiger Bypass- bzw. Teilgasstrom abgezogen wird. Dieser Teilgasstrom wird durch Zumischung von Frischluft (21), die über ein Gebläse (22) herangefördert werden kann, in einem Kühler (23) auf ca. 300 bis 400 °C abgekühlt, bevor er dann anschließend in einem Abscheider, z. B. elektrostatischer Staubabscheider bzw. Elektrofilter (24) von seinem heißen Bypassstaub befreit wird. Der entstaubte Teilgasstrom (25) wird über Saugzuggebläse (26) und Kamin (27) abgezogen.

Der im Elektrofilter (24) abgetrennte heiße Bypassstaub wird in bespielsweise drei Staubsammeltrichtern aufgesammelt, nämlich im linken Trichter das Staubgrobkorn (28), im mittleren Trichter das Mittelkorn (29) und im rechten Trichter das Feinkorn (30). Wenigstens Grobkorn oder Grob- und Mittelkorn (28 und 29) des heißen Bypassstaubes werden über Leitung (31) in einen direkt mit Kühlluft (32), d. h. frischer Umgebungsluft betriebenen Heißstaubkühler (33) eingeführt und dort durch direkte Wärmeübertragung an die Kühlluft (32) abgekühlt. Mit Vorteil besteht der mit hohem Kühlwirkungsgrad arbeitende direkt mit Kühlluft betriebene Heißstaubkühler (33) aus einem durch kombinierten Gegenstrom/Gleichstrom charakterisierten Zyklonschwebegaswärmetauschersystem mit im Ausführungsbeispiel drei aufeinanderfolgenden Zyklonstufen (34, 35 und 36), wobei in die unterste Zyklonstufe (36) die Kühlluft (32) eingeführt und aus dieser Zyklonstufe der abgekühlte Heißstaub (37) in einen Staubsammelbehälter (38) abgezogen wird, während aus der obersten Zyklonstufe (34) die auf maximal 250 °C angewärmte Kühlerabluft (39) über ein eigenes Saugzuggebläse (40) und Leitung (41) der Umgebungsluft (21) bzw. Kühlluft für den Teilgasstromkühler (23) zugemischt wird. Die mit Feinstaub beladene Kühlerabluft (39) benötigt keinen separaten Staubabscheider, weil diese Kühlerabluft (39) ideal im vorhandenen Elektrofilter (24) entstaubt wird.

Der Austrag des gekühlten Grobkorn/Mittelkorn-Bypassstaubes (37) aus dem Heißstaubkühler (33) und der Austrag des Feinkorns (30) aus dem Teilgasstrom-Entstauber (24) werden im Staubsammelbehälter (38) zusammengefaßt und sämtlicher Bypassstaub wird von dort auf ein Transportorgan (42) gegeben, von welchem der gekühlte Bypassstaub zu seiner weiteren Verwendung abtransportiert wird.

Dadurch, daß mit dem aus dem Elektrofilter (24) abgezogenen Feinkorn (30) des heißen Bypassstaubes der Heißstaubkühler (33) umgangen wird, wird vermieden, daß sich diese Feinstaubkomponente im System Teilgasstromabzug/integriertem Heißstaubkühler (33) anreichert.

Der Hauptmassenstrom des heißen Bypassstaubes, nämlich mehr als 80% wird über Leitung (37) aus dem Staubkühler (33) als ausreichend gekühlt ausgetragen. Die vom Heißstaubkühler (33) abgezogene Kühlerabluft (39) ist maximal auf 250 °C erwärmt und kann deshalb ohne weiteres als zusätzliches Kühlmedium (41) im Teilgasstromkühler (23) zur Abkühlung des ca. 1200 °C heißen Drehofenabgases (20) herangezogen werden. Die Kühlerabluft (39) kann, statt mit der Frischluft (21) vorvermischt zu werden, auch über die gestrichelt gezeichnete Leitung (41') direkt in den Teilgasstromkühler (23) eingeführt werden.

Der aus dem Elektrofilter (24) abgezogene Feinkornanteil (30) des heißen Bypassstaubes beträgt erfahrungsgemäß kleiner 10 % der gesamten Bypassstaubmenge, so daß diese Feinkornkomponente (30) ohne weiteres ungekühlt dem Staubsammelbehälter (38) zugeführt werden kann. Auf jeden Fall wird dadurch erreicht, daß diese heiße Feinstaubkomponente (30) den Betrieb des Zyklonschwebegas-Heißstaubkühlers (33) nicht stören kann.

Weitere Vorteile der Erfindung liegen in der Vermeidung von zusätzlichen Entstaubungsanlagen, in der Energieeinsparung für die Kühlung und Entstaubung sowie im stark reduzierten Wartungsaufwand des Heißstaubkühlers (33).

Durch den erfindungsgemäß integrierten Heißstaubkühler (33) bzw. dessen Abluftstrom (39) wird der Teilgasstrom-Elektrofilter (24) mit nur bis ca. 2 bis 5 % zusätzlicher Kühlluft belastet, während eine mögliche Einleitung der Kühlerabluft (39) unter Umgehung des Teilgasstromkühlers (23) direkt in die zum Elektrofilter (24) führende Gas-/Luftleitung (43), d. h. wenn die angewärmte Abluft (39) des Heißstaubkühlers (33) nicht im Teilgasstromkühler (23) als Kühlmedium genutzt werden würde, das Elektrofilter (24) mit ca. 10 bis 15% an zusätzlichem Luftstrom aus dem Heißstaubkühler (33) belasten würde.

Zweckmäßiger Weise kann für die erfindungsgemäße Schaltungsanordnung zu deren Regelung Meß- und Regeltechnik eingesetzt werden für die Temperaturüberwachung der Kühlerabluft sowie des gekühlten Bypassstaubes jeweils nach dem Heißstaubkühler (33), für die Gesamtkühlluftzufuhr (21 + 41) zum Teilgasstromkühler (23), für die Temperaturüberwachung des Gases (43) vor dem Elektrofilter (24), sowie auch für die Mengenmessung des Feststoffstromes (37) nach Austritt aus dem Heißstaubkühler (33).

## Patentansprüche

1. Anlage zur thermischen Behandlung von mehlförmigen Rohmaterialien, insbesondere zur Herstellung von Zementklinker aus Rohmehl (10), bestehend aus einem Drehrohrofen, (13) mit wenigstens einem dem Drehrohrofen vorgeschalteten und von dessen Abgas durchströmten Wärmetauscherstrang insbesondere Zyklonschwebegaswärmetauschersystem, mit einem dem Drehrohrofen (13) nachgeschalteten Klinkerkühler (16), und mit einem Bypass- bzw. Teilgasabzug (20) zum Abzug eines Teilstromes des Drehofenabgases mit Kühlung in einem Teilgasstromkühler (23) und Entstaubung des abgezogenen Bypassgastromes bzw. Teilgasstromes, in einem Teilgasstrom-Entstauber (24) dadurch gekennzeichnet, daß der Austrag wenigstens der Grobkornkomponenten (28, 29) des heißen Bypassstaubes aus dem Teilgasstrom-Entstauber (24) zu einem direkt mit Kühlluft (32) betriebenen Heißstaubkühler (33) führt und dort durch direkte Wärmeübertragung abgekühlt wird, und daß die Leitung (39, 41 bzs. 41') zum Abzug der erwärmten Kühlluft aus dem Heißstaubkühler (33) mit dem Teilgasstromkühler (23) in Verbindung steht.

2. Anlage nach Anspruch 1, dadurch gekennzeichnet, daß der direkt mit Kühlluft betriebene Heißstaubkühler (33) aus einem durch kombinierten Gegenstrom/Gleichstrom charakterisierten Zyklonschwebegaswärmetauschersystem mit wenigstens einer Zyklonstufe (34 bzw. 35 bzw. 36) besteht.

3. Anlage nach Anspruch 1 oder 2, dadurch gekennzeichnet, daß in der Verbindungsleitung (39) vom Kühlluftabzug des Heißstaubkühlers (33) zum Teilgasstromkühler (23) ein eigenes Saugzuggebläse (40) angeordnet ist.

4. Anlage nach einem oder mehreren der Ansprüche 1 bis 3, dadurch gekennzeichnet, daß der Austrag des gekühlten Grobkorn/Mittelkorn-Bypassstaubes (37) aus dem Heißstaubkühler (33) und der Austrag des Feinkorns (30) aus dem Teilgasstrom-Entstauber (24) ggf. über Staubsammelbehälter (38) zu einem sämtlichen Bypassstaub zu seiner weiteren Verwendung abtransportierenden Transportorgan (42) zusammengefaßt sind.

5. Anlage nach einem oder mehreren der Ansprüche 1 bis 4, dadurch gekennzeichnet, daß der Betrieb des Heißstaubkühlers (33) durch eine Temperaturüberwachung am Saugzugventilator (40) geregelt wird, wobei eine Mindestluftmenge im Heißstaubkühler stets eingestellt bleibt, selbst wenn die Kühlerablufttemperatur unter dem eingestellten Sollwert liegt.

6. Anlage nach einem oder mehreren der Ansprüche 1 bis 5, dadurch gekennzeichnet, daß der Betrieb des Teilgasstromkühlers (23) über eine Temperaturregelung nach Kühler geführt wird, wobei eine Volumenstromkorrektur am Kühlluftventilator (22) des Teilgasstromkühlers begründet durch eine Änderung des Kühlluftstromes (39) aus dem Heißstaubkühler (33) in Umgehung des Temperaturregelkreises nach Teilgasstromkühler (23) direkt auf die Kühlluftmenge des Teilgasstromkühlers wirkt.

## Claims

1. An installation for the thermic treatment of flour-formed raw materials, especially for the production of cement clinker from raw flour (10), comprising a rotary furnace (13) with at least one heat exchanger line connected before it through which its exhaust gases flow, especially a whirling gas cyclone heat exchanger system, with a clinker cooler (16) connected after the rotary furnace (13), with a by-pass or partial gas outlet (20) to take off a partial stream of the rotary furnace exhaust gas, with cooling in a partial gas stream cooler (23) and dust removal in a partial gas stream dust remover (24) of the by-pass gas stream or partial gas stream drawn off characterised in that the take-out removes at least the large grain sized components (28, 29) of the hot by-pass dust from the partial gas stream dust remover (24) to a hot dust cooler (33) driven directly by cooling air (32) and there it is cooled by direct heat transfer, and that the connecting line (39, 41 or 41') to the take-out of the heated cooling air from the hot dust cooler (33) is in connection with the partial gas stream cooler (23).

2. An installation according to Claim 1, characterised in that the hot dust cooler (33) driven directly by cooling air comprises a combined counter flow/direct flow characterised cyclone swirling gas heat exchanger with at least one cyclone stage (34 or 35 or 36).

3. An installation according to Claim 1 or Claim 2, characterised in that an individual induced draught blower (40) is arranged in the connecting line (39) from the cooling air take-off of the hot dust cooler (33) to the partial gas stream cooler (23).

4. An installation according to one or more of the Claims 1 to 3, characterised in that the take off of the cooled large grain/medium grain by-pass dust (37) from the hot dust cooler (33) and the take off of the fine grain (30) from the partial gas stream dust remover (24) are collected together, possibly via a dust collector (38), into an overall by-pass dust to a transport member (42) transporting it away for its later application.

5. An installation according to one or more of the Claims 1 to 4, characterised in that the operation of the hot dust cooler (33) is regulated by temperature monitoring at the induced draught ventilator (40), whereby a minimum air quantity remains continuously set in the hot dust cooler, even when the cooler exhaust air temperature lies below the target value set in.

6. An installation according to one or more of the Claims 1 to 5, characterised in that the operation of the partial gas stream cooler (23) is controlled by a temperature regulation after the cooler, whereby a volume flow correction on the cooling air ventilator (22) of the partial gas stream cooler, based on a change in the cooling air stream (39) from the hot dust cooler (33), by-passing the temperature regulating circuit following the partial gas stream cooler (23) works directly on the quantity of cooling air in the partial gas stream cooler.

## Revendications

1. Installation de traitement thermique de matière brute à l'état de poussière notamment pour la fabrication de klinker de ciment à partir de farine brute (10) comprenant :
- un four tournant (13),
- au moins un ensemble d'échange de chaleur en amont du four tournant et traversé par les gaz de sortie du four, notamment un dispositif de préchauffage par cyclonage en suspension dans les gaz,
- un refroidisseur de klinker (16) en aval du four tournant (13) et,
- une extraction de flux partiel de gaz ou de dérivation (20) pour extraire un flux partiel du gaz de sortie du four tournant avec refroidissement dans un refroidisseur à courant partiel de gaz (23) et dépoussiérage dans un dépoussiéreur à courant partiel de gaz (24) pour le flux partiel de gaz ou flux de gaz de dérivation ainsi extrait,
caractérisée en ce que
- l'extraction d'au moins des composantes à grains grossiers (28, 29) de la poussière de dérivation chaude du dépoussiérage de flux partiel de gaz (24), est amenée à un refroidisseur de poussière chaude (33) fonctionnant directement avec de l'air de refroidissement (32) pour y être refroidie directement par échange de chaleur, et
- la conduite (39, 41, 41') pour l'extraction de l'air de refroidissement réchauffé du refroidisseur à poussière chaude (33) communique avec le refroidisseur à courant partiel de gaz (23).

2. Installation selon la revendication 1,
caractérisée en ce que
le refroidisseur à poussière chaude (33) qui utilise directement l'air de refroidissement est formé d'un système d'échangeur de chaleur par cyclonage en suspension dans les gaz caractéristique à combinaison de contre courant et de courant direct, avec au moins un étage cyclone (34, 35, 36) .

3. Installation selon la revendication 1 ou 2,
caractérisée en ce qu'
un ventilateur aspirateur (40) distinct est monté dans la conduite de liaison (39) entre la sortie d'air de refroidissement du radiateur de poussière chaude (33) et le radiateur de courant partiel de gaz (23).

4. Installation selon l'une ou plusieurs des revendications 1 à 3,
caractérisée en ce que
l'extraction de la poussière de dérivation (37) à grains grossiers/grains moyens, refroidie du refroidisseur de poussière chaude (33) et l'extraction de grains fins (30) du dépoussiéreur à courant partiel de gaz (24) sont réunies, le cas échéant, par un collecteur de poussière (38) pour donner une poussière globale de dérivation fournie à un organe de transport (42) qui l'évacue pour la suite de l'utilisation.

5. Installation selon l'une ou plusieurs des revendications 1 à 4,
caractérisée en ce que
le fonctionnement du refroidisseur à poussière chaude (33) est régulé par une surveillance de température au niveau du ventilateur aspirateur (40) et une quantité d'air minimale dans le refroidisseur à poussière chaude reste toujours réglée même si la température d'air du refroidisseur passe en dessous de la valeur de consigne réglée.

6. Installation selon l'une ou plusieurs des revendications 1 à 5,
caractérisée en ce que
le fonctionnement du refroidisseur à courant partiel de gaz (23) se fait par une régulation de température après le refroidisseur, et une correction de débit volumique au niveau du ventilateur d'air de refroidissement (22) du refroidisseur à courant partiel de gaz agit par une modification du courant d'air de refroidissement (39) du refroidisseur à poussière chaude (33) en contournant le circuit de régulation de température après le refroidisseur à courant de gaz partiel (23), directement sur la quantité d'air de refroidissement du refroidisseur à courant partiel de gaz.
